# EUROPÄISCHE PATENTANMELDUNG

(11) **EP 0 634 221 A1**
(43) Veröffentlichungstag der Anmeldung: **18.01.1995**
(21) Anmeldenummer: 94109240.5
(22) Anmeldetag: 16.06.1994
(51) Int. Cl.: B03D 1/02, C22B 11/00

(54) **Verfahren zur Gewinnung von Silber aus dem Rückstand der Zinklaugung durch Flotation**

(30) Priorität: 13.07.1993 DE 4323339
(71) Anmelder: METALLGESELLSCHAFT AG, D-60323 Frankfurt am Main (DE)
(72) Erfinder: Beyzavi, Ali-Nagi, Dr., D-60435 Frankfurt am Main (DE); Dittmann, Horst, D-63654 Büdingen (DE); Rosenstock, Friedrich, D-60385 Frankfurt am Main (DE)

(57) **Zusammenfassung**

Es wird ein Verfahren zur Gewinnung von Silber aus dem Rückstand der Zinklaugung durch Flotation beschrieben, wobei der Rückstand aus der neutralen Zinklaugung abgetrennt, anschließend attritioniert und der attritionierte Rückstand einer Flotation unterzogen wird.

## Beschreibung

Die vorliegende Erfindung betrifft ein Verfahren zur Gewinnung von Silber aus dem Rückstand der Zinklaugung durch Flotation.

In dem Rückstand aus der Zinklaugung liegt Silber überwiegend als Ag₂S vor.

Aus Metallurgical Transactions B, Vol. 19 B, Oktober 1988 - 803, ist bekannt, daß aus den bei der Firma Mitsubishi Akita Zink anfallenden Rückständen der neutralen Laugung durch Flotation mit AC-404 bei einem pH-Wert von 3,5 bis 4,0 ein silberausbringen von 80 % des ursprünglich vorhandenen Silbers mit etwas Gold erreicht wird. Weiter ist aus der Veröffentlichung bekannt, daß Zhuzhou bei einer Flotation unter sauren Bedingungen und unter Verwendung eines nicht näher spezifizierten Sammlers ein Ausbringen von etwa 70 % des ursprünglich vorhandenen Silbers erzielt. Schließlich ist aus der Veröffentlichung bekannt, daß Vieille Montagne durch Flotation in zwei Flotationskonzentraten ein Silberausbringen von ungefähr 90 % des ursprünglich vorhandenen Silbers und ein Bleiausbringen von ungefähr 75 % des ursprünglich vorhandenen Bleis aus Rückständen der heißen sauren Laugung erzielt.

Bei der Zinklaugung wird üblicherweise in ein bis zwei Laugungsstufen verfahren. Die erste Stufe wird als die neutrale Zinklaugung bezeichnet. Die neutrale Zinklaugung verläuft gewöhnlich im schwachsauren pH-Bereich. Die zweite Laugungsstufe wird im sauren pH-Bereich durchgeführt. Die zweite Laugungsstufe wird wegen mangelnder Wirtschaftlichkeit häufig nicht durchgeführt.

Der Erfindung liegt die Aufgabe zugrunde, ein wirtschaftliches Verfahren zur Gewinnung von Silber aus dem Rückstand der neutralen Zinklaugung durch Flotation bereitzustellen, wobei in der Flotation das maximale Ausbringen an Silber erreicht wird.

Die Aufgabe der Erfindung wird dadurch gelöst, daß der Rückstand aus der neutralen Zinklaugung abgetrennt, anschließend attritioniert und der attritionierte Rückstand einer Flotation unterzogen wird.

Durch die Kombination von Attrition und Flotation werden erfindungsgemäß Silberkonzentrate von 2000 bis 2600 g/t Silber bei 245 g/t im eingesetzten Rückstand erreicht. Das Silberausbringen liegt bei dem erfindungsgemäßen Verfahren im Bereich von > 89,5 %. Nach der Attrition des Rückstandes aus der neutralen Zinklaugung liegt das Material mit einer großen spezifischen Oberfläche vor. Die Flotation ist erfindungsgemäß zum Trennen der Metallgehalte dieses Materials vorgesehen. Während der Attrition werden die Kornoberflächen der Körner abgerieben, wodurch auf der Oberfläche der Körner vorhandene silberhaltige Verkrustungen abgetrennt werden. Bei der Flotation des Rückstandes aus der neutralen Zinklaugung werden mit vorheriger Attrition höhere Silbergehalte und höheres Silberausbringen erreicht.

Die Flotation erfolgt in an sich bekannter Weise, indem der attritionierte Rückstand mit Wasser aufgeschwemmt, mit Sammlern versetzt, die Suspension durch Rühren konditioniert sowie mit Schäumern versetzt wird und die Luftzufuhr eingestellt wird.

Eine bevorzugte Ausgestaltung der Erfindung ist, daß der Rückstand aus der neutralen Zinklaugung in einer Trommel mit einer Mahlkörperfüllung von 20 bis 30 Vol.-%, einer Mahlkörpergröße von < 30 mm und einer Netto-Energieaufnahme der Trommel von 2 bis 10 kWh/t Durchsatz behandelt wird.

Die erfindungsgemäße Attrition kann in einer Kugelmühle, Rohrschwingmühle und in Attritionsrührwerken durchgeführt werden. Die Netto-Energieaufnahme der Trommel der jeweiligen Mühle ist die auf den Trommelmantel übertragene Energie, d. h. die Energieaufnahme der Trommel in gefülltem Zustand minus der Energieaufnahme im Leerzustand. Die Netto-Energieaufnahme ist auf den Durchsatz an trockenem Rückstand bezogen.

Mit dieser erfindungsgemäß durchgeführten Attritionierung konnten Silberkonzentrate mit besonders hohem Silbergehalt und besonders hohes Silberausbringen erreicht werden.

Eine bevorzugte Ausgestaltung der Erfindung ist, daß durch die Attritionierung des Rückstandes aus der neutralen Zinklaugung die spezifische Oberfläche der Körner um 50 bis 60 % erhöht wird.

Die durch die erfindungegemäße Attrition erreichte hohe spezifische Kornoberfläche ist auf das Abreiben der silberhaltigen Verkrustung auf der Oberfläche der Körner zurückzuführen. Die mechanische Freisetzung der silberhaltigen Verkrustungen ergibt ein besonders hohes Silberausbringen.

Die Erfindung wird anhand der Beispiele erläutert.

Es wurden Rückstände aus der neutralen Zinklaugung verwendet. Das Material hatte einen Wassergehalt von 48 Gew.-%. Bei dem Material betrug der d50-Wert 7,9 µm und der d80-Wert 19µm. Die Silbergehalte des Rückstandes betrugen 245 g/t. Die wichtigsten Bestandteile des Rückstandes waren: Pb 3,4 Gew.-%, Zn 19,0 Gew.-%, Cu 1,7 Gew.-%, Fe 26,7 Gew.-% und S 4,5 Gew.-%. Die Werte für die Gewichtsprozente dieser Bestandteile beziehen sich auf den trockenen Rückstand.

Die Attrition wurde in einer Kugelmühle durchgeführt. Die Netto-Energieaufnahme der Trommel lag in der Größenordnung von 10 kWh/t Durchsatz. Der pH-Wert wurde während der Flotation mit H₂SO₄ eingestellt. Als Sammler wurde Kaliumamylxanthat, in einer Menge von etwa 600 g/t, eingesetzt. Die Suspension wurde durch Rühren konditioniert. Als Schäumer wurde ein modifiziertes pineoil¹⁾ eingesetzt.
¹⁾ Hersteller: Hoechst AG

Der Rückstand aus der neutralen Zinklaugung war, wie aus der nachstehend aufgeführten Tabelle I hervorgeht, fein. Aus der Tabelle I geht ebenfalls hervor, daß die Attrition keinen großen Einfluß auf die Korngröße hatte. Durch die Attrition wurde jedoch die spezifische Oberfläche der Körner des Rückstandes um 53 % erhöht.

**Tabelle I**

| | d80 mm | d50 mm | spez. Oberfläche²⁾ cm²/g |
|---|---|---|---|
| Rückstand | | | |
| ohne Attrition | 0,019 | 0,0079 | 7470 |
| nach Attrition | 0,0166 | 0,0076 | 11460 |

| | | | |
|---|---|---|---|
| ²⁾ Fisher-Sub-Sieve-Sizer | | | |

Die Flotation wurde jeweils mit 300 g/l Feststoff in der Trübe durchgeführt. Zu der Trübe wurden Sammler in der Konzentration 600 g/t eingesetztem Feststoff dazugegeben. Die Konditionierung wurde durch Rühren durchgeführt und dauerte etwa 5 Minuten. Zu der Suspension wurden Schäumer in der Konzentration von 30 g/t eingesetztem Feststoff gegeben. Die spezifische Luftzugabe erfolgte mit 60 Nm³/h pro m³ Zelleninhalt. Die Flotationszeit betrug etwa 7 Minuten. Während dieser Zeit wurde die Luft zugegeben und der gebildete Schaum kontinuierlich abgezogen.

Aus dem tabellarisch aufgeführten Beispiel "Flotation mit vorheriger Attrition" geht hervor, daß das Ausbringen an Silber im Schaum (1) 89,8 % der Aufgabe betrug. Im Abgang (1) wurden 10,2 % der Aufgabe gemessen. Aus dem Beispiel geht weiter hervor, daß der Silbergehalt der Aufgabe 245 g/t betrug. Im Schaum (1) wurde ein Silbergehalt von 2000 g/t gemessen. Im Abgang (1) wurde ein Silbergehalt von 28 g/t gemessen. Im Beispiel lag die Aufkonzentrierung des Silbergehalts im Schaum (1) im Vergleich zu der Aufgabe um den Faktor 8,2 höher; der wesentliche Vorteil ist jedoch, daß das Ausbringen an Silber im Schaum (1) 89,8 % betrug.

Aus dem Vergleichsbeispiel "Silberflotation ohne Attrition" wird deutlich, daß das Ausbringen an Silber im Schaum (1) nur 16 % der Aufgabe betrug. Im Abgang (1) wurden 84,0 % Silber der Aufgabe bestimmt. Weiter geht aus dem Vergleichsbeispiel hervor, daß der Silbergehalt bei der Aufgabe 245 g/t betrug. Im Schaum (1) betrug der Silbergehalt 885 g/t, was einer Aufkonzentrierung des Silbergehalts nur um den Faktor 3,6 entspricht.

### Beispiel

| Flotation mit vorheriger Attrition | | | | | | | | |
|---|---|---|---|---|---|---|---|---|
| Produkt | Gew. -% | Metallgehalte % | | | | | | g/t Ag |
| | | Pb | Zn | Cu | Fe | As | S | |
| Schaum (1) | 11,0 | 2,8 | 26,0 | 2,6 | 22,9 | 0,29 | 9,8 | 2000 |
| Abgang (1) | 89,0 | 3,2 | 18,7 | 1,7 | 27,3 | 0,43 | 4,32 | 28 |
| Schaum (2) | 20,9 | 3,6 | 19,0 | 1,7 | 27,8 | 0,40 | 4,4 | - |
| Abgang (2) | 68,1 | 3,5 | 18,6 | 1,7 | 27,2 | 0,40 | 4,3 | - |
| Aufgabe | 100,0 | 3,4 | 19,5 | 1,8 | 26,8 | 0,38 | 4,93 | 245 |

| Produckt | | Ausbringen (%) | | | | | | |
|---|---|---|---|---|---|---|---|---|
| | | Pb | Zn | Cu | Fe | As | S | Ag |
| Schaum (1) | | 9,0 | 14,7 | 16,0 | 9,3 | 7,9 | 21,9 | 89,8 |
| Abgang (1) | | 91,0 | 85,3 | 84,0 | 90,7 | 92,1 | 78,1 | 10,2 |
| Schaum (2) | | 21,9 | 20,4 | 19,9 | 21,6 | 21,1 | 18,7 | - |
| Abgang (2) | | 69,1 | 64,9 | 64,1 | 69,1 | 71,0 | 59,4 | - |
| Aufgabe | | 100,0 | 100,0 | 100,0 | 100,0 | 100,0 | 100,0 | 100,0 |

### Vergleichsbeispiel

| Flotation ohne vorherige Attrition | | | | | | | | |
|---|---|---|---|---|---|---|---|---|
| Produkt | Gew. -% | Metallgehalte % | | | | | | g/t Ag |
| | | Pb | Zn | Cu | Fe | As | S | |
| Schaum (1) | 4,4 | 2,1 | 34,2 | 1,8 | 18,4 | 0,24 | 16,3 | 885 |
| Abgang (1) | 95,6 | 3,4 | 1,6 | 1,7 | 27,1 | 0,36 | 3,5 | 215 |
| Schaum (2) | 16,9 | 6,0 | 7,0 | 3,1 | 24,9 | 0,33 | 6,0 | - |
| Abgang (2) | 78,7 | 2,9 | 19,7 | 1,4 | 27,6 | 0,45 | 3,0 | - |
| Aufgabe | 100,0 | 3,4 | 19,9 | 1,7 | 26,7 | 0,42 | 4,09 | 245 |

| Produkt | | Ausbringen (%) | | | | | | |
|---|---|---|---|---|---|---|---|---|
| | | Pb | Zn | Cu | Fe | As | S | Ag |
| Schaum (1) | | 2,7 | 7,5 | 4,7 | 3,0 | 2,4 | 17,6 | 16,0 |
| Abgang (1) | | 97,3 | 92,5 | 95,3 | 97,0 | 97,6 | 82,4 | 84,0 |
| Schaum (2) | | 29,9 | 14,6 | 30,6 | 15,7 | 14,3 | 24,7 | - |
| Abgang (2) | | 67,4 | 77,9 | 64,7 | 81,3 | 83,3 | 57,7 | - |
| Aufgabe | | 100,0 | 100,0 | 100,0 | 100,0 | 100,0 | 100,0 | 100,0 |

## Patentansprüche

1. Verfahren zur Gewinnung von Silber aus dem Rückstand der Zinklaugung durch Flotation, dadurch gekennzeichnet, daß der Rückstand aus der neutralen Zinklaugung abgetrennt, anschließend attritioniert und der attritionierte Rückstand einer Flotation unterzogen wird.

2. Verfahren nach Anspruch 1, dadurch gekennzeichnet, daß der Rückstand aus der neutralen Zinklaugung in einer Trommel mit einer Mahlkörperfüllung von 20 bis 30 Vol.-%, einer Mahlkörpergröße von < 30 mm und einer Netto-Energieaufnahme der Trommel von 2 bis 10 kWh/t Durchsatz behandelt wird.

3. Verfahren nach den Ansprüchen 1 oder 2, dadurch gekennzeichnet, daß durch die Attritionierung des Rückstandes aus der neutralen Zinklaugung die spezifische Oberfläche der Körner um 50 bis 60 % erhöht wird.
